# EUROPEAN PATENT APPLICATION

(11) **EP 4 760 873 A1**
(43) Date of publication of application: **17.06.2026**
(21) Application number: 25190148.4
(22) Date of filing: 17.07.2025
(51) Int. Cl.: H01M 10/617, H01M 10/6556, H01M 50/209, H01M 50/289

(54) **BATTERY STORAGE CASING AND BATTERY PACK INCLUDING THE SAME**

(30) Priority: 16.12.2024 KR 20240187736
(71) Applicant: Hyundai Motor Company, Seoul 06797 (KR); Kia Corporation, Seoul 06797 (KR); LG Energy Solution, Ltd., Seoul 07335 (KR)
(72) Inventor: KIM, Kyung Mo, 18280 Hwaseong-si, Gyeonggi-do (KR); KO, Gun Woo, 18280 Hwaseong-si, Gyeonggi-do (KR); SHIN, Ju Hwan, 34122 Yuseong-gu, Daejeon (KR); HUR, Nam Hoon, 34122 Yuseong-gu, Daejeon (KR); KIM, Ki Young, 34122 Yuseong-gu, Daejeon (KR); HAN, Nyeon Gu, 34122 Yuseong-gu, Daejeon (KR)
(74) Representative: Hoffmann Eitle

(57) **Abstract**

A battery storage casing includes a lower surface part (100) configured to define a lower surface of the casing, in which a cooling flow path (110) is formed on the lower surface part and provides a path through which a cooling fluid flows, and in which one part of the cooling flow path and another part of the cooling flow path intersect each other when the lower surface part is viewed from a location spaced apart from the lower surface part in an upward/downward direction H.

## Description

### TECHNICAL FIELD

The present disclosure relates to a battery storage casing and a battery pack including the same, and more particularly, to a casing, which has a flow path through which a cooling fluid flows, and a battery pack including the same.

### BACKGROUND

A battery pack may have a structure to accommodate a plurality of batteries, increase energy density per unit volume, and ensure safety by preventing the occurrence of events such as fire or explosion.

In some cases, various factors may provide the safety of the battery pack. For example, a cooling structure may be provided to effectively discharge heat generated from the batteries in the battery pack. The battery pack may have a cooling flow path through which a cooling fluid, such as a coolant or air.

In some cases, where the cooling flow path is formed in the battery pack, the battery disposed to face an upstream region of the cooling flow path may be excessively cooled relative to the battery disposed to face a downstream region of the cooling flow path. In some cases, a large deviation of temperatures may exist between the degrees to which the batteries are cooled in the battery pack, which may affect heat dissipation performance of the battery pack and degrade the safety of the battery pack.

### SUMMARY

The present disclosure describes a battery pack that can improve heat dissipation performance of the battery pack by decreasing a deviation between the degrees to which batteries mounted in the battery pack are cooled.

According to one aspect of the subject matter described in this application, a battery storage casing has an accommodation space defined therein. The battery storage casing includes a lower surface part that defines a lower surface of the battery storage casing, the lower surface part defining a cooling flow path configured to carry a cooling fluid, where the cooling flow path includes a plurality of regions that extend in directions intersecting with each other.

Implementations according to this aspect can include one or more of the following features. For example, the battery storage casing can further include a first member having an internal space that is in fluid communication with a first side of the cooling flow path, and a second member having an internal space that is in fluid communication with a second side of the cooling flow path. The cooling flow path can include an inlet cooling flow path that is in fluid communication with the internal space of the first member, and an outlet cooling flow path that is in fluid communication with the internal space of the second member, where at least a part of the inlet cooling flow path extends in a direction intersecting with the outlet cooling flow path.

In some examples, the inlet cooling flow path can include a first inlet cooling flow path region that is in fluid communication with the internal space of the first member and extends in a first direction intersecting with an upward/downward direction of the battery storage casing, where the outlet cooling flow path can include first outlet cooling flow path regions that are in fluid communication with the internal space of the second member and extend in the first direction. For instance, the first inlet cooling flow path region extends in the first direction intersecting with the outlet cooling flow path, or the first outlet cooling flow path regions extend in the first direction intersecting with the inlet cooling flow path.

In some implementations, the inlet cooling flow path and the outlet cooling flow path can define an intersecting section at which the inlet cooling flow path and the outlet cooling flow path are arranged to extend in the directions intersecting with each other, where the outlet cooling flow path is spaced apart from the inlet cooling flow path in the upward/downward direction at the intersecting section. In some examples, the first inlet cooling flow path region can be disposed outward relative to a first portion of the first outlet cooling flow path regions in a second direction intersecting with the upward/downward direction. In some examples, the first inlet cooling flow path region is disposed inward relative to a second portion of the first outlet cooling flow path regions in the second direction.

In some implementations, the inlet cooling flow path further can include a second inlet cooling flow path region that is in fluid communication with the first inlet cooling flow path region and extends in a second direction intersecting with the first direction of the first inlet cooling flow path region, where the outlet cooling flow path further can include a second outlet cooling flow path region that is in fluid communication with the first outlet cooling flow path regions and extends in the second direction. For instance, (i) the first inlet cooling flow path region and the second outlet cooling flow path region extend in the first and second directions intersecting with each other, or (ii) the first outlet cooling flow path regions and the second inlet cooling flow path region extend in the first and second directions intersecting with each other. In some examples, the second inlet cooling flow path region and the second outlet cooling flow path region can be spaced apart from each other.

In some implementations, the first inlet cooling flow path region and the first outlet cooling flow path regions can extend in the first direction, where the first direction corresponds to a leftward/rightward direction of the battery storage casing. In some examples, the second inlet cooling flow path region and the second outlet cooling flow path region can extend in the second direction, where the second direction corresponds to a forward/rearward direction of the battery storage casing intersecting with the upward/downward direction and the leftward/rightward direction.

In some implementations, the second inlet cooling flow path region is one of a plurality of second inlet cooling flow path regions, and the second outlet cooling flow path region is one of a plurality of second outlet cooling flow path regions. The plurality of second outlet cooling flow path regions define a second-first outlet cooling flow path region disposed at the first side in a leftward/rightward direction intersecting the upward/downward direction, and a second-second outlet cooling flow path region spaced apart from the second-first outlet cooling flow path region in the leftward/rightward direction, where at least a portion of the plurality of second inlet cooling flow path regions is disposed between the second-first outlet cooling flow path region and the second-second outlet cooling flow path region in the leftward/rightward direction.

In some examples, all of the plurality of second inlet cooling flow path regions are disposed between the second-first outlet cooling flow path region and the second-second outlet cooling flow path region in the leftward/rightward direction.

In some implementations, the cooling flow path further can include a connection cooling flow path that connects the second inlet cooling flow path region to the second outlet cooling flow path region and faces the first inlet cooling flow path region and the first outlet cooling flow path region, where the second inlet cooling flow path region and the second outlet cooling flow path region are disposed between the first inlet cooling flow path region and the first outlet cooling flow path region. In some examples, a height of the second inlet cooling flow path region in the upward/downward direction corresponds to a height of the second outlet cooling flow path region in the upward/downward direction.

In some implementations, the lower surface part can include a lower surface forming member having an internal space and including a plurality of partition wall regions that divide the internal space, where the lower surface forming member has an upper surface facing the accommodation space, and the plurality of partition wall regions define at least a part of the cooling flow path. In some implementations, the plurality of partition wall regions can define (i) at least a part of the second inlet cooling flow path region and (ii) at least a part of the second outlet cooling flow path region, where at least a part of the second inlet cooling flow path region and at least a part of the second outlet cooling flow path region face each other with one of the plurality of partition wall regions being interposed therebetween.

In some examples, the plurality of partition wall regions are spaced apart from one another in a leftward/rightward direction of the battery storage casing intersecting the upward/downward direction, and the plurality of partition wall regions can include a communication partition wall region that extends in a forward/rearward direction of the battery storage casing intersecting the upward/downward direction and the leftward/rightward direction. The communication partition wall region can extend from a first end of two opposite ends of the lower surface forming member in the forward/rearward direction toward a second end of the two opposite ends of the lower surface forming member, where the communication partition wall region extends to a point spaced apart from the second end of the lower surface forming member by a predetermined distance. The second end of the lower surface forming member and the first inlet cooling flow path region face each other with the second inlet cooling flow path region being interposed therebetween, or the second end of the lower surface forming member and the first outlet cooling flow path region face each other with the second outlet cooling flow path region being interposed therebetween.

In some implementations, a portion of a bottom surface of the lower surface forming member defines the second outlet cooling flow path region, where the lower surface forming member defines a discharge hole at the portion of the bottom surface of the lower surface forming member.

In some implementations, the battery storage casing can include a panel that is coupled to the bottom surface of the lower surface forming member and faces the discharge hole in the upward/downward direction, where an internal space is defined between the panel and the bottom surface of the lower surface forming member. In some examples, the internal space defined between the panel and the bottom surface of the lower surface forming member can be in fluid communication with the internal space of the second member.

In some implementations, the inlet cooling flow path can have a symmetric structure in a leftward/rightward direction of the battery storage casing intersecting with an upward/downward direction of the battery storage casing. In some implementations, the outlet cooling flow path can have a symmetric structure in a leftward/rightward direction of the battery storage casing intersecting with an upward/downward direction of the battery storage casing.

In some implementations, the battery storage casing can include a closure cover that is disposed at one side of the lower surface forming member in the forward/rearward direction, the closure cover having an inner surface and facing the communication partition wall region. In some implementations, the lower surface forming member can be made of a material for an extrusion process.

According to another aspect, a battery pack includes the battery storage casing described above and a battery stack accommodated in the accommodation space. The battery stack includes a plurality of batteries that are stacked in a stacking direction, where at least a part of the cooling flow path and the battery stack face each other in a region of the accommodation space, and the cooling flow path in the region of the accommodation space extends parallel to the stacking direction of the plurality of batteries.

In some implementations, it can be possible to improve the heat dissipation performance of the battery pack by decreasing a deviation between the degrees to which the batteries mounted in the battery pack are cooled.

### BRIEF DESCRIPTION OF THE DRAWINGS

FIG. 1 is an exploded perspective view illustrating an example of a battery pack.
FIG. 2 is a perspective view illustrating an example of a battery storage casing provided in the battery pack.
FIG. 3 is a view illustrating an example of a cooling flow path defined in the battery storage casing.
FIG. 4 is a sectional view illustrating an example of a second member provided in the battery storage casing and surrounding components thereof.
FIG. 5 is a bottom view illustrating the battery storage casing that is disposed upside down.
FIG. 6 is an exploded perspective view of the battery storage casing.

### DETAILED DESCRIPTION

Hereinafter, a battery storage casing and a battery pack will be described with reference to the drawings.

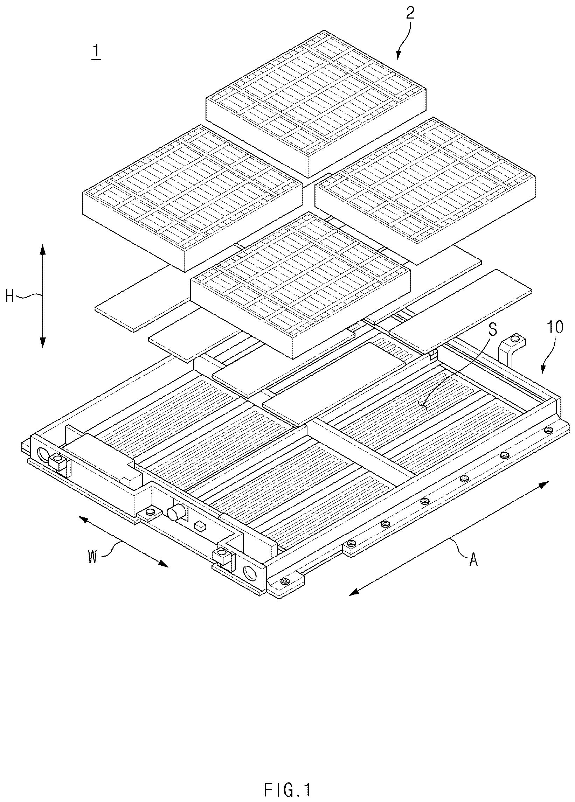

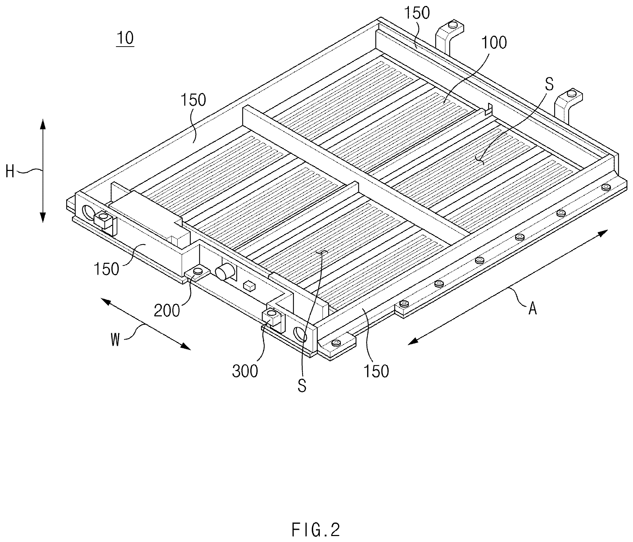

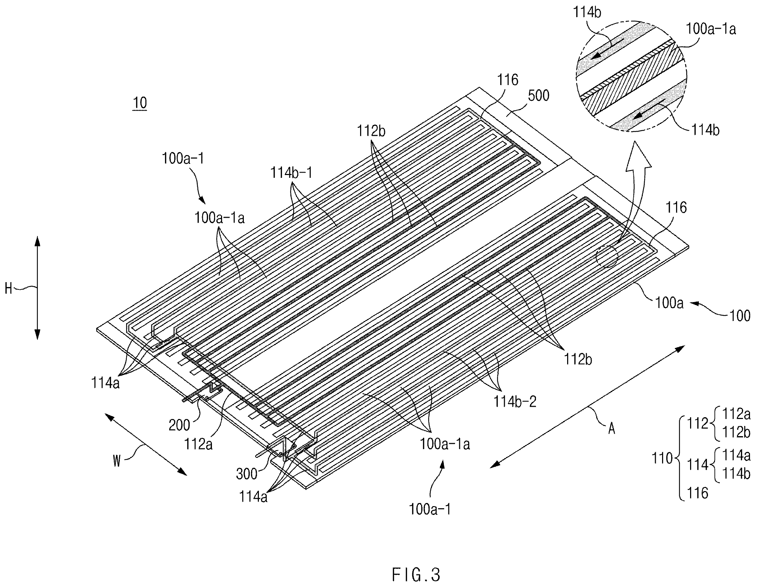

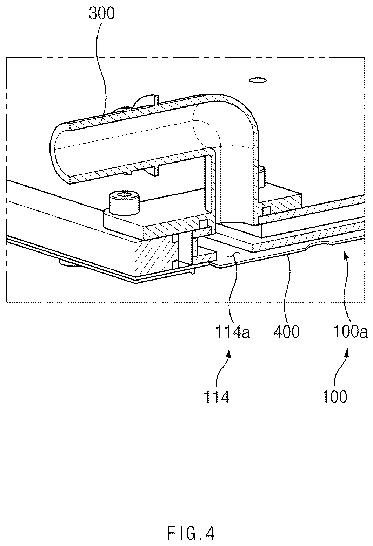

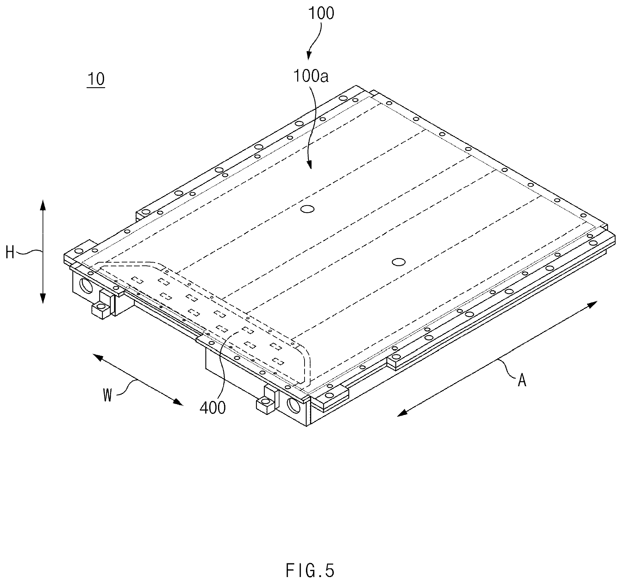

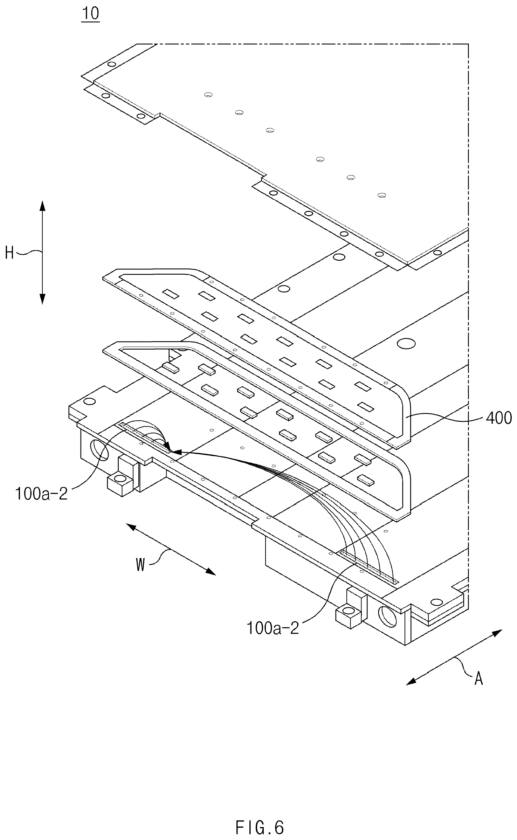

FIG. 1 is an exploded perspective view illustrating an example of a battery pack, and FIG. 2 is a perspective view illustrating an example of a battery storage casing provided in the battery pack. FIG. 3 is a view illustrating an example of a cooling flow path formed by the battery storage casing, and FIG. 4 is a sectional view illustrating an example of a second member provided in the battery storage casing and surrounding components thereof. FIG. 5 is a view illustrating a state in which the battery storage casing is inverted upside down, and FIG. 6 is an exploded perspective view of the battery storage casing.

In some implementations, the battery storage casing can be configured to accommodate one or more batteries. For example, the battery can be a lithium-ion battery. However, the type of battery is not limited thereto. In some examples, the battery can be a secondary battery.

The battery storage casing can be configured to accommodate one or more batteries while defining an outer surface of a battery pack. That is, the battery storage casing can be a casing of the battery pack. In some implementations, the battery storage casing can also be applied to various types of structures (e.g., a battery module) capable of accommodating the batteries without being limited to the name "battery pack."

With reference to FIGS. 1 and 2, a battery storage casing 10 can have an accommodation space S formed therein. The accommodation space S can be a space that accommodates battery stacks 2 each including a structure in which a plurality of batteries are stacked. Furthermore, the accommodation space S can serve as a space for accommodating other components, such as busbars or various types of electrical components, mounted in a battery pack 1. Hereinafter, for convenience of description, the battery storage casing is referred to as a "casing."

The casing 10 can include a lower surface part 100 configured to define a lower surface of the casing, and lateral surface parts 150 configured to define a lateral surface region of the casing. More specifically, the lower surface part 100 and the lateral surface parts 150 can define the above-mentioned accommodation space S. The configuration in which the lower surface part and the lateral surface parts define the accommodation space can be understood as a configuration in which the lower surface part and the lateral surface parts define a boundary of the accommodation space. In some implementations, in the present specification, based on FIGS. 1 and 2, a direction in which the lower surface part 100 is directed toward the accommodation space S is defined as an upward/downward direction H. However, this configuration is provided only for convenience of description and may not mean that the lower surface part 100 of the casing 10 is necessarily disposed at a lower side of the casing in actual use. For example, in actual use, the lower surface part 100 of the casing 10 can be disposed at one side or an upper side based on a horizontal direction. For example, the lower surface part 100 can include plates, walls, frames, etc.

In some implementations, an internal space can be formed in the lower surface part 100. More specifically, a cooling flow path 110 can be formed in the lower surface part 100 and define a path through which a cooling fluid flows. That is, the cooling flow path 110 can be understood as an empty space defined by the lower surface part 100.

More specifically, in some examples, the cooling flow path 110 formed in the lower surface part 100 can have a shape in which the cooling fluid flowing through the cooling flow path can uniformly cool the entire battery stack 2 accommodated in the accommodation space S.

In related art, during a process in which the cooling fluid passes through the cooling flow path, the battery over which the cooling fluid passes first is excessively cooled, whereas the battery over which the cooling fluid passes later is less cooled. In this case, there is a problem in that the degrees to which the batteries are cooled can vary depending on the positions of the batteries provided in the battery pack.

In some implementations, it can be possible to reduce a deviation between the degrees to which the batteries provided in the battery pack are cooled.

In some implementations, one part of the cooling flow path 110 and another part of the cooling flow path 110 can intersect each other when the lower surface part 100 is viewed from a location spaced apart from the lower surface part 100 in the upward/downward direction H. Hereinafter, a detailed shape of the cooling flow path 110 will be described.

With reference to FIGS. 1 to 4, the casing 10 can further include a configuration for providing a path for supplying the cooling fluid to the cooling flow path 110, and a configuration for providing a path for discharging the cooling fluid, which has flowed through the cooling flow path 110, to the outside. More specifically, the casing 10 can further include a first member 200 having an internal space in fluid communication with one side of the cooling flow path 110, and a second member 300 having an internal space in fluid communication with the other side of the cooling flow path 110.

In some implementations, the cooling flow path 110 can include an inlet cooling flow path 112 in fluid communication with the internal space of the first member 200, and an outlet cooling flow path 114 in fluid communication with the internal space of the second member 300. For example, the cooling fluid introduced through the first member 200 from the outside can flow sequentially through the inlet cooling flow path 112, the outlet cooling flow path 114, and then be discharged to the outside through the second member 300. In this case, a part of the inlet cooling flow path 112 and the outlet cooling flow path 114 can intersect each other when the lower surface part 100 is viewed from a location spaced apart from the lower surface part 100 in the upward/downward direction H. For example, the first member 200 and the first member 300 can have a box shape, a plate shape, or a pipe shape.

More specifically, the inlet cooling flow path 112 and the outlet cooling flow path 114 can each be divided into a plurality of flow path regions. More specifically, with reference to FIG. 3 and the like, the inlet cooling flow path 112 can include a first inlet cooling flow path region 112a in fluid communication with the internal space of the first member 200 and extending in a direction intersecting the upward/downward direction H. The outlet cooling flow path 114 can include first outlet cooling flow path regions 114a in fluid communication with the internal space of the second member 300 and extending in the direction intersecting the upward/downward direction H.

In this case, as illustrated in FIG. 3 and the like, when the lower surface part 100 is viewed from a location spaced apart from the lower surface part 100 in the upward/downward direction H, i) the first inlet cooling flow path region 112a and the outlet cooling flow path 114 can intersect each other, or ii) the first outlet cooling flow path region 114a and the inlet cooling flow path 112 can intersect each other. For example, FIG. 3 illustrates a state in which the first outlet cooling flow path region 114a intersects the inlet cooling flow path 112, and the first inlet cooling flow path region 112a is spaced apart from the outlet cooling flow path 114.

With continued reference to FIG. 3, in addition to the first inlet cooling flow path region 112a, the inlet cooling flow path 112 can further include second inlet cooling flow path regions 112b including portions in fluid communication with the first inlet cooling flow path region 112a and extending in a direction intersecting the extension direction of the first inlet cooling flow path region 112a. In addition, in addition to the first outlet cooling flow path regions 114a, the outlet cooling flow path 114 can further include second outlet cooling flow path regions 114b including portions in fluid communication with the first outlet cooling flow path regions 114a and extending in the direction intersecting the extension direction of the first outlet cooling flow path regions 114a.

In some examples, when the lower surface part 100 is viewed from a location spaced apart from the lower surface part 100 in the upward/downward direction H, i) the first inlet cooling flow path region 112a and the second outlet cooling flow path region 114b can intersect each other, or ii) the first outlet cooling flow path region 114a and the second inlet cooling flow path region 112b can intersect each other. For example, FIG. 3 illustrates a state in which the first outlet cooling flow path region 114a intersects the second inlet cooling flow path region 112b, and the first inlet cooling flow path region 112a is spaced apart from the second outlet cooling flow path region 114b.

In some implementations, in the present specification, in the horizontal direction intersecting the upward/downward direction H, a direction in which the second inlet cooling flow path region 112b and the second outlet cooling flow path region 114b of the casing 10 extend is defined as a forward/rearward direction A, and a direction intersecting the upward/downward direction H and the forward/rearward direction A is defined as a leftward/rightward direction W. In this application, a first direction can refer to the leftward/rightward direction W, and a second direction can refer to the forward/rearward direction A.

In some examples, the first inlet cooling flow path region 112a and the first outlet cooling flow path region 114a can each include a section extending in the leftward/rightward direction W intersecting the upward/downward direction H. For example, FIG. 3 illustrates a state in which the first inlet cooling flow path region 112a includes only a section extending in the leftward/rightward direction W, and the first outlet cooling flow path region 114a includes both a section extending in the leftward/rightward direction W and a section extending in the forward/rearward direction A.

In some implementations, the second inlet cooling flow path region 112b and the second outlet cooling flow path region 114b can each include a section extending in the forward/rearward direction A intersecting the upward/downward direction H and the leftward/rightward direction W. For example, FIG. 3 illustrates a state in which the second inlet cooling flow path region 112b and the second outlet cooling flow path region 114b each extend in the forward/rearward direction A as a longitudinal direction. That is, the second inlet cooling flow path region 112b and the second outlet cooling flow path region 114b can each include only a section extending in the forward/rearward direction A.

In some implementations, as described above, the inlet cooling flow path 112 and the outlet cooling flow path 114 can intersect each other when the lower surface part 100 is viewed from a location spaced apart from the lower surface part 100 in the upward/downward direction H. In some examples, the outlet cooling flow path 114 can be spaced apart downward from the inlet cooling flow path 112 in the section in which the inlet cooling flow path 112 and the outlet cooling flow path 114 intersect each other. For example, as illustrated in FIG. 3, in case that the second inlet cooling flow path region 112b and the first outlet cooling flow path region 114a intersect each other, the first outlet cooling flow path region 114a can be spaced apart downward from the second inlet cooling flow path region 112b in the section in which the second inlet cooling flow path region 112b and the first outlet cooling flow path region 114a intersect each other. In some implementations, the inlet cooling flow path 112 can be spaced apart downward from the outlet cooling flow path 114 in the section in which the inlet cooling flow path 112 and the outlet cooling flow path 114 intersect each other.

In some implementations, according to an example of the present disclosure, the first inlet cooling flow path region 112a can be formed between some of the first outlet cooling flow path regions 114a and some of the other first outlet cooling flow path regions 114a in the forward/rearward direction A intersecting the upward/downward direction H. More specifically, as illustrated in FIG. 3, based on the forward/rearward direction A, the first inlet cooling flow path region 112a can be formed outward of some of the first outlet cooling flow path regions 114a and formed inward of some of the other first outlet cooling flow path regions 114a. In this case, the first outlet cooling flow path region 114a can further include a connection portion that connects a portion, which is formed inward of the first inlet cooling flow path region 112a based on the forward/rearward direction A, and a portion formed outward of the first inlet cooling flow path region 112a based on the forward/rearward direction A. In this case, as described above, the connection portion can extend in the forward/rearward direction A. Therefore, while the first inlet cooling flow path region 112a includes only the section extending in the leftward/rightward direction W, the first outlet cooling flow path region 114a can include not only the section extending in the leftward/rightward direction W but also the section (i.e., the above-mentioned connection portion) extending in the forward/rearward direction A.

With continued reference to FIG. 3, in the cooling flow path 110 of the casing 10, the second inlet cooling flow path region 112b and the second outlet cooling flow path region 114b can be spaced apart from each other. More specifically, the second inlet cooling flow path region 112b and the second outlet cooling flow path region 114b can be spaced apart from each other in the leftward/rightward direction W.

In some implementations, the second inlet cooling flow path regions 112b can be provided as a plurality of second inlet cooling flow path regions 112b, and the second outlet cooling flow path regions 114b can be provided as a plurality of second outlet cooling flow path regions 114b. In this case, as illustrated in FIG. 3, the second inlet cooling flow path regions 112b can be formed between the second outlet cooling flow path regions 114b in the leftward/rightward direction W. More specifically, some of the plurality of second outlet cooling flow path regions 114b can define a second-first outlet cooling flow path region 114b-1 formed at one side based on the leftward/rightward direction W intersecting the upward/downward direction H, and some of the other second outlet cooling flow path regions 114b among the plurality of second outlet cooling flow path regions 114b can define a second-second outlet cooling flow path region 114b-2 spaced apart from the second-first outlet cooling flow path region 114b-1 in the leftward/rightward direction W. In this case, at least some of the plurality of second inlet cooling flow path regions 112b can be formed between the second-first outlet cooling flow path region 114b-1 and the second-second outlet cooling flow path region 114b-2 in the leftward/rightward direction W. More particularly, as illustrated in FIG. 3, all of the plurality of second inlet cooling flow path regions 112b can be formed between the second-first outlet cooling flow path region 114b-1 and the second-second outlet cooling flow path region 114b-2 in the leftward/rightward direction W.

With continued reference to FIG. 3, the cooling flow path 110 formed on the lower surface part 100 of the casing 10 can further include connection cooling flow paths 116 configured to connect the second inlet cooling flow path regions 112b and the second outlet cooling flow path regions 114b. The connection cooling flow paths 116 connect the second inlet cooling flow path regions 112b and the second outlet cooling flow path regions 114b, such that the cooling fluid introduced into the lower surface part 100 can pass through the first inlet cooling flow path region 112a and the second inlet cooling flow path regions 112b and then pass through the second outlet cooling flow path regions 114b and the first outlet cooling flow path regions 114a.

The connection cooling flow paths 116 can be formed at a side opposite to the first inlet cooling flow path region 112a and the first outlet cooling flow path regions 114a based on the second inlet cooling flow path regions 112b and the second outlet cooling flow path regions 114b. More specifically, as illustrated in FIG. 3, the connection cooling flow paths 116 can be formed to face the first inlet cooling flow path region 112a and the first outlet cooling flow path regions 114a with the second inlet cooling flow path regions 112b and the second outlet cooling flow path regions 114b interposed therebetween.

In some implementations, a height of the second inlet cooling flow path region 112b in the upward/downward direction H and a height of the second outlet cooling flow path region 114b in the upward/downward direction H can correspond or be substantially equal to each other. This can be because the second inlet cooling flow path region 112b and the second outlet cooling flow path region 114b are spaced apart from each other in the leftward/rightward direction W, as described above.

In some implementations, with reference to FIGS. 1 to 3, the lower surface part 100 can further include a lower surface forming member 100a having an internal space and including a plurality of partition wall regions 100a-1 configured to divide the internal space, and an upper surface of the lower surface forming member 100a is provided to face the accommodation space S of the casing 10. More specifically, the partition wall regions 100a-1 can define at least a part of the cooling flow path 110. That is, at least a part of the cooling flow path 110 can be understood as a space divided by the partition wall regions 100a-1. For example, the lower surface forming member 100a can include plates or sheets made of a material such as metal, plastic, ceramic, or composite.

More specifically, the partition wall region 100a-1 can define at least a part of the second inlet cooling flow path region 112b and at least a part of the second outlet cooling flow path region 114b. In this case, as illustrated in FIGS. 1 to 3, at least a part of the second inlet cooling flow path region 112b and at least a part of the second outlet cooling flow path region 114b can be formed to face each other with the partition wall region 100a-1 interposed therebetween. The two second inlet cooling flow path regions 112b, which are adjacent to each other among the plurality of second inlet cooling flow path regions 112b, can be formed to face each other with the partition wall region 100a-1 interposed therebetween, and the two second outlet cooling flow path regions 114b, which are adjacent to each other among the plurality of second outlet cooling flow path regions 114b, can be formed to face each other with the partition wall region 100a-1 interposed therebetween.

With continued reference to FIGS. 1 to 3, the plurality of partition wall regions 100a-1 provided on the lower surface forming member 100a can extend in the longitudinal direction as the forward/rearward direction A intersecting the upward/downward direction H and the leftward/rightward direction W. The plurality of partition wall regions 100a-1 can each include a communication partition wall region 100a-1a extending to one of two opposite ends of the lower surface forming member 100a based on the forward/rearward direction A and extending to a point spaced apart, at a predetermined distance, from the other of the two opposite ends of the lower surface forming member 100a based on the forward/rearward direction A.

The communication partition wall region 100a-1a can define the connection cooling flow path 116. More specifically, the other end of the lower surface forming member 100a based on the forward/rearward direction A can be i) provided to face the first inlet cooling flow path region 112a with the second inlet cooling flow path region 112b interposed therebetween or ii) provided to face the first outlet cooling flow path region 114a with the second outlet cooling flow path region 114b interposed therebetween. Therefore, the two adjacent second inlet cooling flow path regions 112b, the two adjacent second outlet cooling flow path regions 114b, and the connection cooling flow path 116, which connects the second inlet cooling flow path region 112b and the second outlet cooling flow path region 114b adjacent to each other, can be formed by an interval between the other end of the communication partition wall region 100a-1a and an inner surface of the lower surface forming member 100a.

In some implementations, with reference to FIGS. 5 and 6, discharge holes 100a-2 can be formed in portions of a bottom surface of the lower surface forming member 100a of the casing 10 that define the second outlet cooling flow path regions 114b. Therefore, the cooling fluid flowing in the second outlet cooling flow path regions 114b can be discharged from the lower surface forming member 100a through the discharge holes 100a-2.

In addition, the casing 10 can further include a panel 400 fixedly coupled to the bottom surface of the lower surface forming member 100a and configured to define an internal space together with the bottom surface of the lower surface forming member 100a. More specifically, the internal space, which is defined by the bottom surface of the lower surface forming member 100a and the panel 400, can define the first outlet cooling flow path regions 114a. In this case, a partial region of the panel 400 can be provided to face the discharge holes 100a-2 in the upward/downward direction H. Therefore, the cooling fluid flowing through the second outlet cooling flow path regions 114b formed on the lower surface forming member 100a can be discharged downward through the discharge holes 100a-2. The cooling fluid discharged downward can be collected in the first outlet cooling flow path regions 114a that are at least a part of the internal space defined by the lower surface forming member 100a and the panel 400. The cooling fluid collected in the first outlet cooling flow path regions 114a can be discharged to the outside from the casing 10 through the second member 300. Therefore, the internal space formed in the second member 300 can communicate with the internal space defined by the bottom surface of the lower surface forming member 100a and the panel 400. More specifically, the internal space formed in the second member 300 can communicate with the first outlet cooling flow path regions 114a (see FIG. 4). More particularly, the discharge hole 100a-2 can be formed in a region of the lower surface forming member 100a adjacent to the second member 300. In addition, more particularly, the discharge hole 100a-2 can be formed to face an end of the second outlet cooling flow path region 114b based on the forward/rearward direction A.

In some implementations, with reference to FIG. 3 and the like, the inlet cooling flow path 112 can have a symmetric structure in the leftward/rightward direction W intersecting the upward/downward direction H, and the outlet cooling flow path 114 can also have a symmetric structure in the leftward/rightward direction W intersecting the upward/downward direction H.

In some implementations, with reference to FIG. 3 and the like, the casing 10 can further include a closure cover 500 provided at one side of the lower surface forming member 100a based on the forward/rearward direction A.

One side of the above-mentioned lower surface forming member 100a can have a shape opened outward. More specifically, an end of the lower surface forming member 100a, which is based on a direction opposite to the direction toward the first member 200 and the second member 300, can have a shape opened outward. Therefore, a component may be additionally coupled to the end of the lower surface forming member 100a, which is based on the direction opposite to the direction toward the first member 200 and the second member 300, in order to seal the inlet cooling flow path 112 and the outlet cooling flow path 114, which are formed on the lower surface forming member 100a, from the outside.

The closure cover 500 can be configured to seal the inlet cooling flow path 112 and the outlet cooling flow path 114 from the outside by being coupled to the end of the lower surface forming member 100a, which is based on the direction opposite to the direction toward the first member 200 and the second member 300. In addition, the closure cover 500 can be configured to define the connection cooling flow path 116. More specifically, the connection cooling flow path 116 can be formed by an inner surface of the closure cover 500 and an end of the communication partition wall region 100a-1a based on the forward/rearward direction A.

In some implementations, the lower surface forming member 100a of the casing 10 can be manufactured by an extrusion process. In this case, the cooling flow path can be more easily formed by the lower surface forming member 100a. That is, the second inlet cooling flow path regions 112b and the second outlet cooling flow path regions 114b formed on the lower surface forming member 100a can each have a straight shape extending in the forward/rearward direction A. Therefore, in order to form the second inlet cooling flow path region 112b and the second outlet cooling flow path region 114b each having a straight shape, it can be advantageous in terms of time and costs to form the lower surface forming member 100a by using the extrusion process.

Hereinafter, with reference to the above-mentioned contents and drawings, a flow of the cooling fluid in the casing 10 will be described.

The cooling fluid introduced through the first member 200 from the outside can flow through the first inlet cooling flow path region 112a in fluid communication with the first member 200. The cooling fluid, which flows in the leftward/rightward direction W in the direction in which the first inlet cooling flow path region 112a extends, can be introduced into the second inlet cooling flow path regions 112b branching off from the first inlet cooling flow path region 112a and flow in the forward/rearward direction A in the direction in which the second inlet cooling flow path region 112b extends. Thereafter, the cooling fluid, which reaches the ends of the second inlet cooling flow path regions 112b based on the forward/rearward direction A, can pass through the connection cooling flow paths 116 and then flow through the second outlet cooling flow path regions 114b. The cooling fluid, which flows in the forward/rearward direction A in the direction in which the second outlet cooling flow path regions 114b extend, can be dropped downward from the ends of the second outlet cooling flow path regions 114b based on the forward/rearward direction A through the discharge holes 100a-2, and the cooling fluid dropped from the discharge holes 100a-2 can be collected in the first outlet cooling flow path regions 114a. Thereafter, the cooling fluid flowing through the first outlet cooling flow path regions 114a can be discharged to the outside again through the internal space of the second member 300 in fluid communication with the first outlet cooling flow path regions 114a. The arrows in FIG. 6 indicate schematic flow paths through which the cooling fluid discharged downward through the discharge holes 100a-2 reaches the second member through the first outlet cooling flow path regions.

The battery pack 1 will be described with reference to the above-mentioned contents and drawings.

The detailed description of the battery storage casing 10 provided in the battery pack can be replaced with the above-mentioned description of the battery storage casing.

The battery pack 1 can include the battery storage casing 10 (hereinafter, referred to as a "casing"), and the battery stack 2 accommodated in the accommodation space S of the casing 10 and having the structure in which the plurality of batteries are stacked.

In this case, the battery pack 1 can be configured to transfer heat, which is generated from the batteries of the battery stack 2, to the cooling fluid flowing through the cooling flow path 110. Therefore, at least a part of the cooling flow path 110 and the battery stack 2 can be provided to face each other. More particularly, the battery stack 2 can be provided to face most of the region of the cooling flow path 110. For instance, the battery stack 2 can face more than 50% of the region of the cooling flow path 110. In some examples, with reference to the drawings, the battery stack 2 can face the second inlet cooling flow path regions 112b and the second outlet cooling flow path regions 114b of the cooling flow path 110.

In some implementations, in a region in which the battery stack 2 and the cooling flow path 110 face each other, a direction, in which the batteries of the battery stack 2 are stacked, and a direction, in which the cooling flow path 110 extends, can be parallel to each other. For example, with reference to the drawings, the batteries of the battery stack 2 can be stacked in the forward/rearward direction A of the battery pack 1, and the second inlet cooling flow path region 112b and the second outlet cooling flow path region 114b, which face the battery stack 2, can also extend in the forward/rearward direction A.

The present disclosure has been described with reference to the limited implementations and the drawings, but the present disclosure is not limited thereby. The present disclosure can be carried out in various forms by those skilled in the art, to which the present disclosure pertains, within the technical spirit of the present disclosure and the scope equivalent to the appended claims.

## Claims

1. A battery storage casing having an accommodation space defined therein, the battery storage casing comprising:
a lower surface part that defines a lower surface of the battery storage casing, the lower surface part defining a cooling flow path configured to carry a cooling fluid,
wherein the cooling flow path comprises a plurality of regions that extend in directions intersecting with each other.

2. The battery storage casing of claim 1, further comprising:
a first member having an internal space that is in fluid communication with a first side of the cooling flow path; and
a second member having an internal space that is in fluid communication with a second side of the cooling flow path,
wherein the cooling flow path comprises:
an inlet cooling flow path that is in fluid communication with the internal space of the first member, and
an outlet cooling flow path that is in fluid communication with the internal space of the second member, and
wherein at least a part of the inlet cooling flow path extends in a direction intersecting with the outlet cooling flow path.

3. The battery storage casing of claim 2, wherein the inlet cooling flow path comprises a first inlet cooling flow path region that is in fluid communication with the internal space of the first member and extends in a first direction intersecting with an upward/downward direction of the battery storage casing,
wherein the outlet cooling flow path comprises first outlet cooling flow path regions that are in fluid communication with the internal space of the second member and extend in the first direction, and
wherein the first inlet cooling flow path region extends in the first direction intersecting with the outlet cooling flow path, or the first outlet cooling flow path regions extend in the first direction intersecting with the inlet cooling flow path.

4. The battery storage casing of claim 2 or 3, wherein the inlet cooling flow path and the outlet cooling flow path define an intersecting section at which the inlet cooling flow path and the outlet cooling flow path are arranged to extend in the directions intersecting with each other, and
wherein the outlet cooling flow path is spaced apart from the inlet cooling flow path in the upward/downward direction at the intersecting section.

5. The battery storage casing of claim 3 or 4, wherein the first inlet cooling flow path region is disposed outward relative to a first portion of the first outlet cooling flow path regions in a second direction intersecting with the upward/downward direction.

6. The battery storage casing of claim 5, wherein the first inlet cooling flow path region is disposed inward relative to a second portion of the first outlet cooling flow path regions in the second direction.

7. The battery storage casing of any one of claims 3 to 6, wherein the inlet cooling flow path further comprises a second inlet cooling flow path region that is in fluid communication with the first inlet cooling flow path region and extends in a second direction intersecting with the first direction of the first inlet cooling flow path region,
wherein the outlet cooling flow path further comprises a second outlet cooling flow path region that is in fluid communication with the first outlet cooling flow path regions and extends in the second direction, and
wherein (i) the first inlet cooling flow path region and the second outlet cooling flow path region extend in the first and second directions intersecting with each other, or (ii) the first outlet cooling flow path regions and the second inlet cooling flow path region extend in the first and second directions intersecting with each other.

8. The battery storage casing of claim 7, wherein the second inlet cooling flow path region and the second outlet cooling flow path region are spaced apart from each other.

9. The battery storage casing of claim 7 or 8, wherein the first inlet cooling flow path region and the first outlet cooling flow path regions extend in the first direction, the first direction corresponding to a leftward/rightward direction of the battery storage casing.

10. The battery storage casing of claim 9, wherein the second inlet cooling flow path region and the second outlet cooling flow path region extend in the second direction, the second direction corresponding to a forward/rearward direction of the battery storage casing intersecting with the upward/downward direction and the leftward/rightward direction.

11. The battery storage casing of any one of claims 7 to 10, wherein the second inlet cooling flow path region is one of a plurality of second inlet cooling flow path regions,
wherein the second outlet cooling flow path region is one of a plurality of second outlet cooling flow path regions,
wherein the plurality of second outlet cooling flow path regions define:
a second-first outlet cooling flow path region disposed at the first side in a leftward/rightward direction intersecting the upward/downward direction, and
a second-second outlet cooling flow path region spaced apart from the second-first outlet cooling flow path region in the leftward/rightward direction, and
wherein at least a portion of the plurality of second inlet cooling flow path regions is disposed between the second-first outlet cooling flow path region and the second-second outlet cooling flow path region in the leftward/rightward direction.

12. The battery storage casing of claim 11, wherein all of the plurality of second inlet cooling flow path regions are disposed between the second-first outlet cooling flow path region and the second-second outlet cooling flow path region in the leftward/rightward direction.

13. The battery storage casing of any one of claims 7 to 12, wherein the cooling flow path further comprises a connection cooling flow path that connects the second inlet cooling flow path region to the second outlet cooling flow path region and faces the first inlet cooling flow path region and the first outlet cooling flow path region, and
wherein the second inlet cooling flow path region and the second outlet cooling flow path region are disposed between the first inlet cooling flow path region and the first outlet cooling flow path region.

14. The battery storage casing of any one of claim 7 to 13, wherein a height of the second inlet cooling flow path region in the upward/downward direction corresponds to a height of the second outlet cooling flow path region in the upward/downward direction.

15. The battery storage casing of any one of claims 7 to 14, wherein the lower surface part comprises a lower surface forming member having an internal space and comprising a plurality of partition wall regions that divide the internal space, the lower surface forming member having an upper surface facing the accommodation space, and
wherein the plurality of partition wall regions define at least a part of the cooling flow path.
